# EUROPEAN PATENT SPECIFICATION

(11) **EP 0 715 573 B1**
(45) Date of publication and mention of the grant of the patent: **07.11.2001**
(21) Application number: 94925979.0
(22) Date of filing: 17.08.1994
(51) Int. Cl.: B41J 2/01, B05D 3/12, B32B 31/00, B29C 67/00

(54) **3-D MODEL MAKER**
VORRICHTUNG ZUR HERSTELLUNG VON DREIDIMENSIONALEN MODELLEN
REALISATEUR DE MODELES EN TROIS DIMENSIONS

(30) Priority: 26.08.1993 US 112437
(43) Date of publication of application: 12.06.1996
(73) Proprietor: Solidscape, Inc., Wilton, NH 03086 (US)
(72) Inventor: SANDERS, Royden C., Jr., Wilton, NH 03086 (US); FORSYTH, John L., Lyndeborough, NH 03082 (US); PHILBROOK, Kempton F., Lyndeborough, NH 03082 (US)
(74) Representative: Watts, Peter Graham
(86) International application number: US9409453
(87) International publication number: WO9505943

(56) References cited:
- EP-A- 0 500 225
- EP-A- 0 529 816
- WO-A-92/18323
- US-A- 3 968 498
- US-A- 5 029 266
- US-A- 5 132 248
- US-A- 5 149 548
- US-A- 5 204 055
- US-A- 5 216 616
- US-A- 5 260 009

## Description

This invention relates to a 3-D model maker according to the precharacterising part of claim 1 and to a method of producing a 3-D model according to the precharacterising part of claim 6. This 3-D model maker utilizes a drop on demand jet to build up a three dimensional model by depositing one drop of modelling compound on another, on a support surface. Model makers of this type have in the past, for example as disclosed in US 5260009, which forms the basis for the preamble of Claim 1 of the present application, operated on a raster scan basis in which the jet is moved along scan lines parallel to one another and drops are deposited on a support surface, where the scan lines intersect the walls of the 3-D model. As the walls of the model will not generally coincide with the scan line, this process generally results in a poor quality jagged finish to the surface of the wall.

US 5216616 and WO 92/18323 disclose methods of building 3-D models by depositing a continuous bead of modelling composition along vectors defining the walls of the model.

US 5204055 discloses a process of building 3-D models by binding together particles and building up the model on a layer by layer basis.

EP 0500225 discloses a system of building three dimensional objects by depositing layers of material and shaving the surface of the layer prior to depositing a subsequent layer.

US 5149548 discloses a system of building three dimensional objects which utilizes light to cure the material which is deposited from an ink jet.

US 3968498 discloses an X-Y plotter for making two dimensional recordings.

US 4665492 discloses a ballistic particle manufacturing method in which a three dimensional model is built up from individual particles, from a point origin.

The object of the present invention is to improve a drop on demand model maker of the type disclosed in US 5260009 by which the quality of finish of the walls may be significantly improved. Furthermore a significant improvement in dimensional accuracy and an ability to manufacture complex shapes should be achieved.

This object is attained according to the invention by the 3-D model maker as defined in claim 1 and by the method as defined in claim 6.

Particular embodiments of the invention are the subject of the dependent claims. The 3-D model maker of the present invention is a device that builds three dimensional models of computer generated (e.g. CAD) structures by plotting layer-upon-layer applications of solidifiable substances. The layers are formed by expelling minuscule beads of the substances in liquid phase onto a platform from one or more jets, the jets and platform being relatively movable in X, Y and Z coordinate system. Preferably X and Y coordinates are horizontal and Z coordinate is vertical. However, other orientations are possible and practical. The beads are deposited along vectors, during X/Y relative movement, on the stage, one at a time, layer-upon-layer, to build the model. The jets and platform are moved relatively to one another in accordance with instructions from the computer (controller) to form each layer in the X-Y plane (in a manner analogous to an X-Y vector plotter) and either stage or the jets may move in the Z direction to allow the jets to form subsequent layers.

In one embodiment of the model maker, there are two jets: one for a first substance that will form the smooth exterior surfaces of the model and provide a bulk filler for the solid interiors of the model, and one for a removable other substance that forms the supports for otherwise unsupported portions of the model (e.g., the cross member of an H-shaped model). The first substance and the bulk filler may, in another embodiment be emitted from separate jets of a three jet system. The Model maker preferably includes a shaver for smoothing the deposited layers in the X-Y plane so that the Z direction build is even. Warpage of the model may be controlled by depositing the beads spaced from one another and backfilling after the deposited beads have solidified.

The heating and composition of the beads is chosen not only to provide structural integrity of the model but also so that they solidify quickly, almost upon contact with the platform or other substances, so that additional layers may be added without delay and so that shrinkage can be controlled or substantially eliminated.

The 3-D model maker produces a 3-D model by sequentially forming layer upon layer, by plotting vectors of modeling material, one layer at a time characterized by a) a support means defining a surface for supporting the 3-D model during production; b) a drop on demand jet means for ejecting bead producing drops of the modeling material one drop at a time upon demand to plot vectors defining the layers; c) mounting means mounting the jet i) for simultaneous movement along at least two axes of an X, Y, Z axis coordinates system relative to said surface to move the jet along any desired vector direction while said jet plots said vector of modeling material on said surface and ii) for movement of the jet, when desired, along all three of the X, Y, Z axes of the system, relative to the surface; and d) control means for controlling the movements in the X, Y, Z axis coordinate system and the ejection of bead producing drops by the jet to generate the vectors of modeling material, defined by the beads, in any and all directions required to produce the model by vector plotting.

The method of producing a 3-D model comprises the steps of a) providing a surface for supporting the 3-D model during production; b) ejecting bead producing drops of modeling material one drop at a time, upon demand from a drop on demand jet means onto the support surface, while moving the jet means and support surface relative to each other in X and Y coordinates, of an X, Y, Z coordinate system, parallel to the support surface under the control of a control means to generate vectors of modeling material in any and all directions required to produce a layer of the model by vector plotting; c) moving the jet means and the support surface relative to each other in the Z coordinate direction normal to the support surface under the control of the control means; d) repeating steps b) and c) as required to produce desired additional layer(s) until the model to complete.

The invention will now be described in the following detailed description, by way of example, with reference to accompanying drawings, in which:
Figure 1 is a diagrammatic isometric view of a three jet, 3-D Model Maker according to the present invention.
Figure 2 is a cross-sectional elevation of a jet for use in the present invention;
Figure 3 is an enlarged view of circled portion A of Figure 2;
Figure 4; is an enlarged view of circled portion B of Figure 2;
Figure 5 is an enlarged view of circled portion C of Figure 2;
Figure 6 is a diagrammatic view of a feed system for a jet of the present invention;
Figures 7 and 8 illustrate an electrical pulse used to operate a jet, illustrating the wave form which is the signature of an operating jet and a non-conforming wave form indicating failing of a jet;
Figures 9 to 13 illustrate various lattice reinforcements for use with hollow models.

### Detailed Description of the Invention

### The Model Maker Apparatus

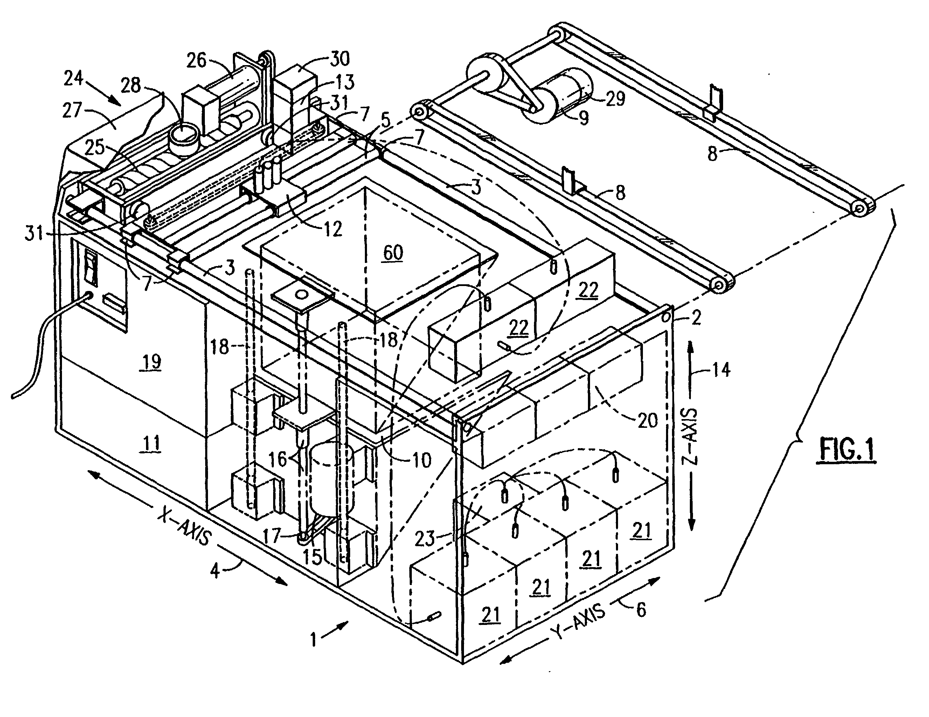

Referring firstly to Figure 1, the 3-D Model Maker 1 of the present invention comprises a frame 2 which supports a horizontal pair of spaced apart rails 3 extending in an X-coordinate direction (axis) 4 of the Model Maker. The rails 3 support a further pair of horizontal spaced apart rails 5 which extend in a Y-coordinate direction (axis), 6. The Y coordinate rails 5 are supported at their ends in bearings 7 on the X-coordinate rails 3 to permit the Y-coordinate rails 5 to slide along the X coordinate rails 3 in the X-coordinate direction. Motion of the Y-coordinate rails along the X-coordinate rails is achieved by the use of a belt drive 8 (shown displaced from the apparatus for clarity) powered by a motor 9 which includes an optical encoder 29 to ascertain and determine the position of the Y-coordinate rails relative to a platform 10 (shown carrying a cubic model) along the X-coordinate under the control of a system logic controller 11.

The Y-coordinate rails 5 support a carriage 12 for sliding movement therealong under the control of a belt driven motor system 13 with optical encoder 30 similar to that described above with respect to motion of the Y-coordinate rails. This system 13 is also controlled by the system logic controller 11 to ascertain and determine the position of the carriage relative to the platform 10, but in this case, in the Y-coordinate direction.

The carriage 12 carries three jets 60, one of which is for ejecting drops of wall producing material (modeling compound-MC), a second of which is for ejecting of drops of a bulk fill material (also MC) and a third of which is for ejecting beads of a support material (SM). These materials are hereinafter described in greater detail.

The platform 10 can be raised and lowered relative to the carriage 12 in the Z-coordinate direction (axis) 14 by means of a stepper motor 15 which drives a screw and nut jack 16, the nut of which is attached to the platform 10 to raise or lower the platform upon rotation of the screw by a belt drive 17 from the stepper motor 15. The platform 10 is guided by bearings on guide posts 18 which extend in the Z-coordinate direction. The guide posts 18 are supported rigidly by the frame 2.

The system logic controller 11 determines the position of the platform relative to the jets 60 in the Z-coordinate direction and the timing of ejection of the bead producing drops of material from the jets 60 using software instructions not unlike those utilized in vector plotters to control the motion of the vector plotter pens in the production of the drawing as will be well understood by those skilled in the art.

The frame 2 supports a power supply 19 which provides the power for the various systems and motors of the model maker in accordance with their individual requirements and the commands issued by the system logic controller 11. Adjacent one end of the X-coordinate rails 3 is a jet checking and cleaning station 20 which will be described in greater detail hereinafter. At that same end of the X-coordinate rails the frame 2 supports heated supply reservoirs 21 which store MC, bulk MC and SC, as required, for supply to the jets 60, by way of feed reservoirs 22. A pressure pump 23 is supported by the frame 2 to pressurize the supply reservoirs 21 when the media carried therein is required to be transported to the feed reservoirs 22.

The X-coordinate rails 3 also support a model shaving system 24 the use of which will be described in detail hereinafter. The model shaving system 24 comprises a slab milling cutter 25 which is belt driven by a motor 26 and includes a housing 27 for connection to a vacuum line by way of an outlet 28 to facilitate removal of shavings produced by the model shaving system. The model shaving system includes electromagnets 31 for engaging the carriage 12 and Y coordinate rails 5 for moving the milling cutter along the X-coordinate rails. The milling cutter 25 defines an axis extending in the Y-coordinate direction and has a length at least as great as the dimension of the platform 10 in the Y-coordinate direction.

It will be appreciated that a plurality of jet groups could readily be accommodated on a single carriage, with means for adjusting their spacing if required, associated with a common X, Y and Z drive arrangement, shaving system, controller, power supply etc. in a single model maker, to permit the simultaneous modeling of a plurality of like models.

It will be appreciated that while model maker 1 described with reference to Figure 1 provides vector movement of the jets 60 in the X-Y coordinate direction and movement of the platform 10 in the Z coordinate direction, other arrangements would be apparent to those skilled in the art. In fact, the X, Y, Z coordinate movements may be provided by moving either the jets 60 alone or the platform 10 alone or by any combination of movements of the jets and platform resulting in the desired coordinate movements. Furthermore, although the Z coordinate direction is preferably vertical, those skilled in the art will appreciate that other orientations for the Z coordinate direction (axis) are possible.

It will be appreciated that while the system logic controller has been described in a manner suggesting it to be a single unit, a plurality of separate control units interacting as needed could together form the system logic controller.

### Jet Structure

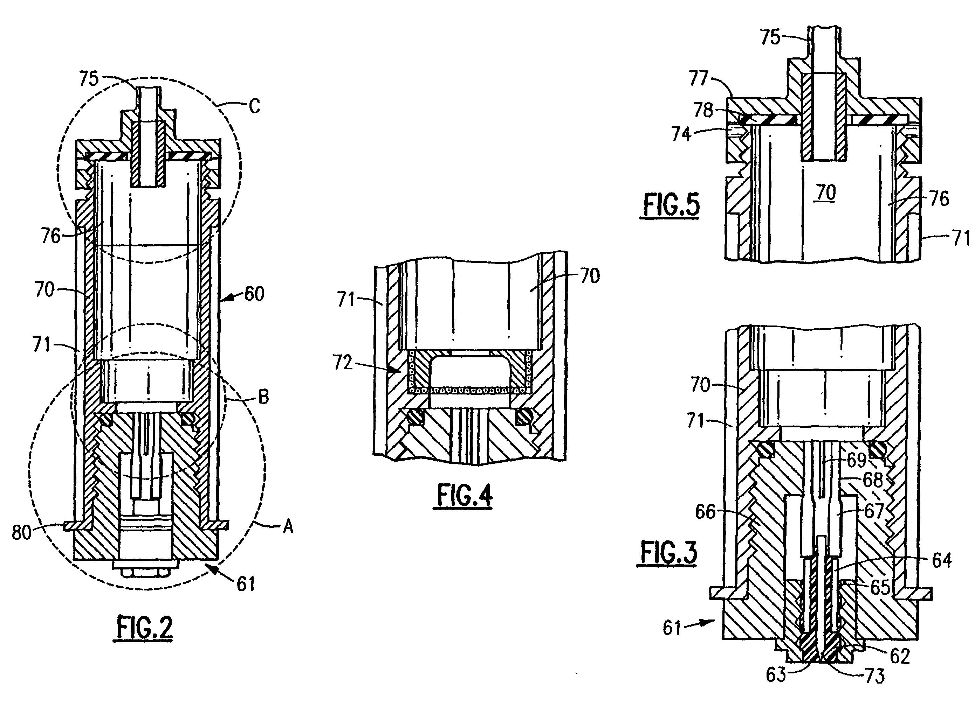

As shown in Figures 2 and 3, the jet tip assembly consists of a small jet tube 62 molded of a flouropolymer and configured internally with a cone in one end 63. During molding the cone is formed closed and is later opened forming an orifice 73 with the desired diameter by slicing off the cone end 63 of the tube. The other end of the tube is open and receives the molten fluid from the supply system which will be discussed hereinafter.

Surrounding the tube is another tube 64 made of a piezoelectric material. This piezo tube 64 is plated to provide electrical connections (i.e. as with a capacitor) to pole the piezo. The piezo tube 64 is surrounded with an electrical potting grade of epoxy 65 to absorb thermal shock. The assembly is then mounted in a threaded aluminum insert 66.

The jet tip assembly 61 further consists of a connect tube 65 formed of a short length of elastomeric tubing which attaches to the open end of the jet tube. The connect tube 67 is pushed through a hole 68 in one end of the insert 66 and then pulled through to the other end. The jet tip assembly 61 is then attached to the connect tube 67 and the connect tube 67 is pulled back to where the jet tip assembly 61 just touches the opening of the insert. The jet tip assembly 61 is then seated into the threaded aluminum insert 66. As the jet tip 61 is being seated, the connect tube 67 is pulled from the other end so that it will not become kinked. After the jet tip assembly 61 is fully seated, the excess tubing is trimmed flush to the back surface of the threaded aluminum insert 66. At this point a small tubular insert 69 (seal tube) is placed in the end of the elastomeric tube.

The small seal tube 69 provides two fundamental functions. First, the seal tube 69 is 0.4 mm larger than the I.D. of the elastomeric connect tube 67. This causes the O.D. of the connect tube 67 to seal the I.D. of the insert 66. Secondly, the small I.D. of the seal tube 69 restricts the pressure head of fluid above by taking advantage of capillary forces and allows the jet head 60 to remain idle for long periods without dripping. The seal tube 69 also counterbalances the head pressure from the volume of fluid above and allows vertical jetting without dripping.

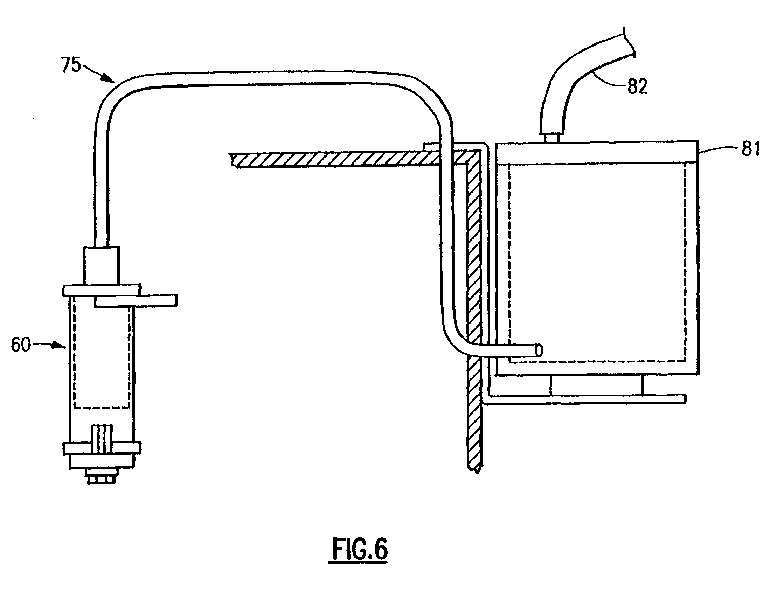

Everything that has been assembled up to this point is then placed in a tubular jet reservoir 70. This tubular jet reservoir 70 has a heater 71 and a filter 72 (Figure 4).

Modeling compound (MC) is delivered from a heated reservoir 81, through a heated supply line 75 (Figure 5) to the jet reservoir 70. The MC supply is maintained and the line remains primed to the jet head through natural siphoning action. Absolute priming of the delivery system through to the orifice is of utmost importance.

A small air pocket 76 is maintained inside the jet reservoir above the surface 77 of the MC (Figs. 2 and 5). This "bubble" 76 serves a critical function as an isolator from the hydraulic surges that occur as the jet head reciprocates during jetting. In this way the "bubble" 76 prevents the hydraulic surges resulting from motion of the jet head and the heated supply lines from interfering with the meniscus and the forming of drops.

As jetting continues and the MC level in the jet reservoir drops enlarging the bubble, a small vacuum is produced in the jet reservoir. Since the supply line 75 is in a siphon balance, the small increase in vacuum transfers MC from the heated reservoir to the jet reservoir 70 via the supply line.

Upon powering the system, the jet tube 62 is held at voltage with the piezo tube 64 poled. When the drop eject signal is received the voltage drops and the piezo tube 64 is depoled. Depoling causes the piezo tube 64 to apply a constrictive force to the jet tub 62 and sends an energy wave through the fluid residing in the jet tube 62. The internal volume of the jet tube 62 is also reduced somewhat. The acoustic energy wave and the volumetric constriction together tend to force the fluid in two directions, back toward the feed line and forward toward the orifice. Since the feed line 75 is filled with fluid, the path of least resistance is toward the orifice 73. Also, the fluid in the feed line acts as a barrier and acoustically reflects some portion of the acoustic wave energy. Provided the total energy level is sufficient to overcome the meniscus and resistive forces in the orifice 73, a small drop of MC will be jettisoned.

The tubular jet reservoir body 70 is sized specifically to provide approximately 15 minutes of operation (with the feed line detached) in an effort to keep the size and weight of the jet head 60 and carriage system down to a minimum. The tubular jet reservoir 70 is also the main piece to which the other parts are assembled. Within the reservoir is a recess for the wire cloth filter 72, as shown in Figure 4. When assembled the filter resides just above the jet tip assembly 61 at the bottom of the jet reservoir 70.

A vented cap 77 is located on the top of the jet reservoir providing the connective link between the jet reservoir 70 and the material delivery system. The inside of the cap has an elastomeric seal 78 which insures air tightness within the system. In the sides of the cap, located precisely at the edge of the elastomeric seal, are vent holes 74 which vent directly to the outside atmosphere. These holes are critical in that they provide a method of venting the reservoir with minimum disruption of the inside chamber pressure in the bubble 76 (negatively or positively). When the cap 77 is loosened it immediately breaks the seal allowing air to enter the bubble 76 in the jet reservoir 70 through vent holes 74, and when the cap 77 is tightened it does not adversely increase the reservoir pressure by allowing air to exit the jet reservoir 70 through vent holes 74. This is significant in that the fluid level inside the reservoir remains relatively unchanged. If the vent holes were not there, then when the cover was loosened the unscrewing action would effectively increase the inside volume of the bubble 76 thereby creating a vacuum. This vacuum would suck an air bubble in through the orifice and have the result of stalling the jet when jetting is resumed. Likewise, if the vent holes were not there, the action of screwing the cap on would increase the chamber pressure and force material out the orifice. Without the vents the reservoir would shortly be depleted of material after only a relatively small number of cap removals and replacements.

The insert 66 allows a desired modular approach to the jet head assembly. As earlier described, the insert contains the jet tube 62, the flow restricting seal tube 69, and the elastomeric connecting tube 67. If maintenance is required, this insert is easily removed and access to the rest of the jet head is made available.

The heater 71 is the feed source of heat for the jet head 60. Secondary heat is derived from the molten material delivered to the jet head reservoir 70. The heater 71 is of the foil type and is adhesively applied directly to the external surface of the jet reservoir 70.

The tip of a thermocouple (not shown) makes direct contact with the aluminum tubular jet reservoir 70. The output from the thermocouple is linked to a thermal control device which controls the temperature of the jet head 60 to +/- 2 degrees celsius.

The jet head is clamped to the carriage by a mounting clamp that clamps the lower flange 80 of the reservoir in position on the carriage.

The jet head structure disclosed above is capable of operating under control at 6,000 Htz maximum refire rate. The same size bead of MC is consistently emitted from the jet at the maximum refire rate of 6,000 Htz. If the refire rate is increased to 12,000 Htz, the jet resonates and emits a bead of MC which is twice as large as the bead emitted at 6,000 Htz. Thus, at 12,000 Htz the jet emits four times the volume of MC than at 6,000 Htz, e.g. 2 times the number of beads that are two times as big, thereby building of the model four times as fast. Thus, at 12,000 Htz the model can be built up four times as fast than at 6,000 Htz, although due to the increased size of the beads of MC being deposited there is a corresponding decrease in the quality of the finish of the model produced. Thus, operating the jethead at a refire rate of 12,000 Htz may advantageously be used to fill interior spaces of the model that do not require a good surface finish or to build quick draft models in a draft mode.

It can be appreciated that the modeler may be built with two heads. One head for emitting modeling material for building of the walls at 6,000 Htz and for quickly filling in voids in the model at 12,000 Htz, and a second head for emitting support material at 6,000 Htz to fill in voids in the model. It can also be appreciated that rather than firing the first head at 12,000 Htz and quickly fill in the void in the model, a third head with a larger orifice 73 in the jet tube 62 may be used to emit larger beads of modeling material and thereby fill in interior spaces quickly without necessitating a refire rate of 12,000 Htz, or to fill in even more quickly at 12,000 Htz.

It will be appreciated that a matrix of jets could be provided for quick filling or cross-hatching with one of these jets also forming the wall building jet 60.

### Material/Supply System

According to an embodiment (Figure 6) of the material supply system the modeling compound (MC) and the support compound (SC) have been stored in a feed reservoir 81 for each material, only one of which is shown in Figure 6. These feed reservoirs 81 are mounted on the modeler and are located at critical levels depending on the individual fluid dynamics of the materials.

Each feed reservoir is equipped with an A/C heater (not shown) capable of self regulating temperature control. These heaters can control the MC and SC temperature to within 8 degrees celsius without external temperature controllers.

The feed reservoirs have sealed lids which have a nipple for attaching a viton tube 82. This tube 82 is used to purge the delivery system when it is not attached to the jet head 60 and to purge the jet head when it is attached. Also when a suitable air source is applied, the contamination rate and condition of the filter inside the jet head can be determined.

The basic principle on which the material transfer system functions is siphoning. A fluid balance exists between the feed reservoirs 81 and the jet head reservoirs 70. In a typical system consisting of two reservoirs and a connecting delivery tube, when material is removed from one of the reservoirs, a matching amount of material flows via the delivery tube from the other reservoir to equalize the fluid level. This only works when both reservoirs are at the same atmospheric pressure.

When one of the reservoirs is sealed as in the jet head 60, the system operates a little differently. In the jet head reservoir 70 is the bubble 76. The jet head reservoir 70 is sealed air tight. As the fluid level is depleted inside the jet head reservoir a vacuum develops in the jet reservoir. As these forces increase, fluid flows via the heated delivery line into the jet head reservoir. The air bubble also acts as a stabilizer. Because of the bubble, relatively large fluid level changes can be tolerated. Any change in the fluid level of a feed reservoir would normally have an instantaneous hydraulic effect on the jet meniscus, but with the bubble system, the level changes in the feed reservoir can vary 40 mm without an adverse effect on the jet meniscus. As previously mentioned, the bubble also isolates the jet tip 61 from the hydraulic surges caused by the motions of the jet head carriage. Without the bubble it would be much more difficult to keep the jet functioning properly and consistently.

The MC and the SC are very different compounds. Their most important characteristic is that they both phase change at similar temperatures, but respond to completely different solvents. The solvent that is used to remove the SC has no effect on the MC and vice versa. This creates a very convenient handling environment, plus the solvents used are very common and environmentally safe.

Other differences in the modeling materials are in their density and surface tension. Because of these differences the functional fluid level of each material is different. Basically the MC (sulfonamide based material) fluid level in the feed reservoir is about 25 mm above the fluid level in the jet head reservoir. The fluid level in the SC (wax base material) feed reservoir is about 25 mm below the fluid level in the jet head reservoir.

### Jet Failure Detection

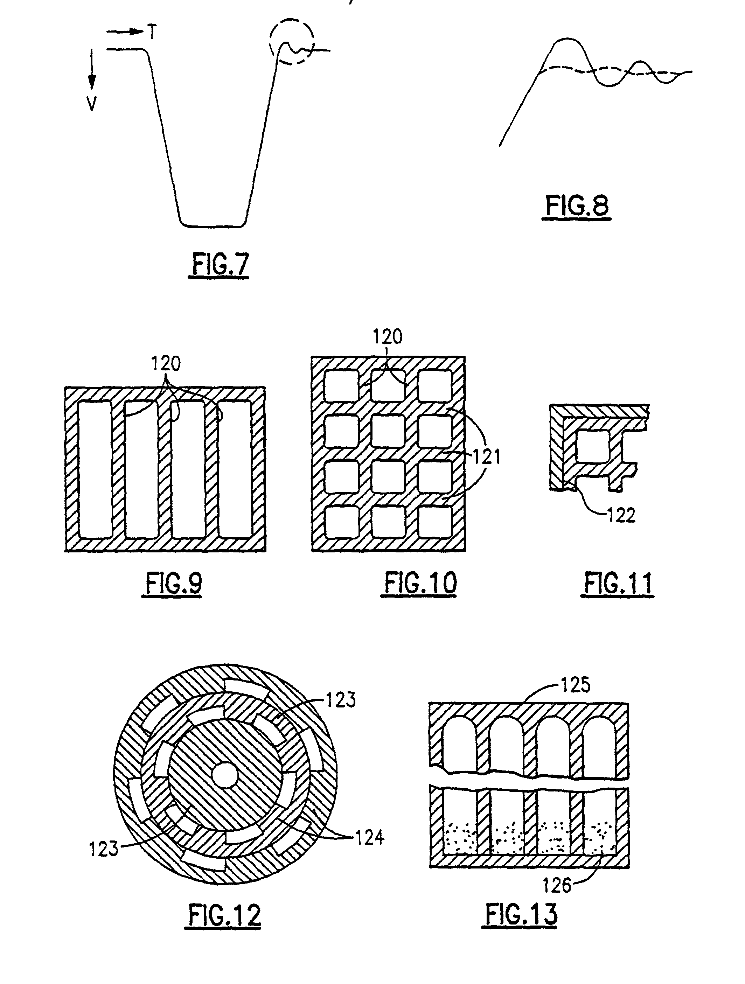

Referring now to Figures 7 and 8, Figure 7 illustrates a piezo activating pulse which is used to cause a drop of compound (MC or SC) be ejected by a jet 60. The pulse approximates a square-wave and terminates with ringing which is encompassed by a dashed circle in Figure 7. Figure 8 is an enlarged view of the ringing shown in Figure 7. Each jet produces a ringing which constitutes a signature of that jet when it is operating normally and this normal signature is illustrated by the solid line in Figure 8.

The signature of an operating jet can be analyzed and stored for comparison with subsequent ringing by that same jet upon the ejection of each drop by that jet. If the subsequent ringing as analyzed is within an appropriate tolerance from the stored information concerning that jet signature, the controller can confirm that the jet is operating properly. If, however, the signal differs significantly from the normal ringing signature, as shown with a dashed line, for example, in Figure 8, the controller will determine that a jet failure has occurred.

### Bead Pitch Control

With appropriate inputs from existing hardware such as encoders 29, 30, appropriate software can perform the following functions.
1) Give firing signals to the jet(s) 60 so that a given quality vector (bead spacing) is produced regardless of the speed, angle, or curvature of the plot. The software and logic control spaces the beads so that specified end dimensions and surface finish are produced.
2) To control bead pitch, software will not move the jet(s) so that their vectored speed over the platform exceeds the maximum refire rate of the jets. There are two ways that the bead pitch can be set, i.e. using either software or hardware.

Currently, hardware adjusts the firing so that a uniform bead pitch is maintained independent of the variable speed, during starting and stopping, or the angle or curvature of the vector. In the case of vectors along the X or Y coordinates, the hardware fires beads every plurality of encoder 29, 30 ticks that matches the bead pitch specified during the acceleration or deceleration period. When the velocity of the vector production approaches (or is a constant speed) the bead firing may, in some cases, switch to firing on a time basis, instead of encoder ticks.

In the case of a diagonal or angled vector, the encoder 29 or 30 is used that represents the biggest incremental value (this indicates that the vector is not more than 45 degrees from the encoder axis used) and the number of encoder ticks will be shortened so that the specified bead pitch will be maintained. The encoders 29, 30 are present to detect movement along each of the x and y coordinates.

In the case of diagonal or curved lines, hardware adjust the bead pitch as measured from one of the encoders "on the fly" by the ratio of two measurements which are proportional Vx and Vy. The arc tangent of the instantaneous ratio or the sum of the squares gives the instantaneous angle of the curve or diagonal line. By using a lookup table, the number of encoder ticks between beads to maintain the desired dot spacing is determined.

The encoder is used that instantaneously has the higher velocity and an instantaneous angle of 0 to 45 degrees. At 45 degrees, switching from one encoder to the other occurs. During slow down for the end of an arc the correct length is maintained by adjusting the last bead pitch spacing.

To implement this desirable function the jets are fired by either the X axis or Y axis encoders 29, 30. The X coordinate encoder 29 is used for all lines within 45 degrees of the X coordinate direction 4 and the Y coordinate encoder 30 is used for angles greater than 45 degrees from the X coordinate direction 4. Thus the desired bead pitch is maintained accurately to the desired pitch regardless of vector direction, speed or curvature.

Typically a bead pitch of 0.025 mm can be achieved with a jet emitting a drop of about 0.09 mm diameter to provide a bead of about 0.12 mm diameter.

The hardware measures the instantaneous angle by measuring the number of encoder ticks, in a known short period of time, of the encoders 29, 30. By taking the ratio of these encoder ticks and using a look-up table, we can determine the number of encoder ticks between bead ejectors to obtain a uniform desired spacing between beads at any instantaneous line angle.

Beads are ejected from the jets by a counter that counts quadrature encoder ticks. The number of counts is adjusted for the instantaneous angle of the line.

There are other more complicated ways of ending the vector at the correct point. The vector length is not usually an even multiple of the bead pitch but usually has a remainder. In order to make the vector come out to an exact length, one of several other more complicated methods could be used:
1) Make "n" uniform beads where "n" equals the line length divided by bead pitch and make one more bead that has a spacing equal to "r", the remainder. "n" and "r" would ideally be supplied by the software, or if necessary, be calculated by the hardware. In most cases, this method is probably the most convenient method to use.
2) A theoretically better result is achieved by arranging for the hardware to increase the pitch of "r" beads so that the exact length is realized. While this method is a little better for straight lines, it is impossible to use in the case of curved lines.
3) Making a bead at the end of a line even though it is not the correct spacing. This causes a variation of the height of the wall at this point which with proper control can be an increase in height. This error in height is corrected when making a cut with the milling cutter as described later.

If, for example, drops ejected by the jets take about 270 microseconds to hit the media and make a bead after it is commanded to do so electrically. At 84 mm/sec jet speed, it takes almost 0.23 mm of translation for the drop to make a bead after it is fired. However, when we start a line and are standing still, we make a bead and then start accelerating, at say 4 Gs. We want to fire the next drop after moving, say 0.24 mm which occurs in 3.6 milliseconds, at which time we are moving at 142 mm/sec which puts the bead at 0.30 mm instead of 0.24 mm. We want the next drop at 0.48 mm, which occurs at 5.1 milliseconds and where the speed will be 200 mm/sec which puts the bead at 0.56 mm, a separation of 0.27mm. We want the next drop at 0.76 mm, which occurs at 6.2 milliseconds and where the speed is 244 mm/sec which puts the bead at 0.83 mm, a separation of 0.27 mm. We want the next drop at 1 mm, which occurs at 7.2 millisecond and where the speed is 282 mm/sec which puts the bead at 1.1 mm, a separation of 0.26 mm. The separation keeps approaching 0.25 mm as the speed approaches 813 mm/sec where we may switch over to firing on time intervals. As we slow down, the dots tend to get closer together by a fraction of a mm instead of further apart.

With software control of bead spacing, we still use the encoder ticks to fire the print module on the acceleration and deceleration parts of the line. We use the encoder 29 or 30 that was closer in angle to the instantaneous angle to fire the jets. Since the controller 11 electronics always knows the instantaneous angle of the line being plotted, this can steer us to a look-up table to tell us the number of ticks to use for refire during this phase. When we refire with time during the constant speed phase, we do not need to use the lookup table.

An alternative to the above approach is as follows. A combination of software and hardware keeps track of encoder ticks. At every encoder tick in either the X or Y axes, it calculates the diagonal distance moved and the current velocity, allowing for the time of flight of the bead, the correct time is calculated for bead firing to get the correct dot spacing.

### Model Building

Using the model maker 1 a three dimensional model is produced using a thermoset drop on demand ejector (jet 60) at a desired "drop pitch" to produce a vector outline of the inside and outside surfaces of a given layer. Preferably, said vector outline is repeated one or more times by off setting subsequent vectors from desired outlines depending on part geometry and build strategy (solid model or shell model). The amount of offset is referred to as "wall pitch". These parameters can be varied to produce a high quality surface 3-D model. Both wall pitch and drop pitch can also be varied to produce a layer thickness range of from about .03 mm to about .18 mm which will result in an operator selectable surface finish/build time trade off. Note: Drop pitch can be controlled as hereinbefore described. Wall pitch control is achieved via software as implemented by the controller 11. Head to tail vector plotting is an additional software control that is used to enhance surface quality.

The model is then produced one horizontal layer at a time using X-Y vector plotting techniques using the jets with the aforementioned bead pitch control. Z coordinate model control is discussed hereinafter under "Layer Growth Control".

While void filling has been discussed using MC ejected from a resonating jet 60 or from a dedicated larger orifice jet, other filling systems are contemplated. For example, voids could be filled by quick set foams (e.g. urethane) or other quick setting and/or quick application materials (e.g. waxes, powders, etc.)

An additional method of filling voids, at the completion of so many layers, but preferably before cutting particles, preferably round beads, at ambient temperature, are added to fill the void to the cutting level. These particles can be of the build material (MC) or could be of any other compatible material.

After filling, at least the upper surface of these particles are glued together by jetting beads from either the build material jet or even the support material jet, after cutting, the model building proceeds as before.

### Layer Growth Control

Z axis control is important in controlling part geometry. With drop volume and thickness variations from machine to machine, presently, the only practical method of controlling the Z axis is to mill the model at selected intervals. Within a given layer, geometric variations such as at intersections, and wall thickness variations contribute to creating a varying layer thickness. Although this may only amount to thousandths of a millimeter per layer, it soon accumulates. Slab milling the top surface after selected intervals guarantees that the vertical growth is under as accurate dimensional control as the X and Y axis.

Additionally, slab milling the top layer at selected intervals helps to relieve intra-layer stresses. Accumulated dot shrinkage is responsible for adding to the warpage control problems that will be discussed later. Milling these layers unbalances the stresses so that the stresses remaining actually work oppositely and cause those layers to tend to warp in the other direction. However, with the firm foundation that the layers are being built on these stresses do not cause problems. To maintain a precise Z-AXIS build, the model shaving system 24 is utilized after one or more layers (preferably five) of modeling compound have been laid down. When the controller 11 senses a "cut command" the rails 5 and carriage 12 assembly move to engage and "pick up" the shaving system via two electromagnets 31 and translate the milling cutter 25 across the model at software selectable cutting speed and feed, return the shaving system 24 to its home position, release the engagement and continue building the model. The milling cutter is coated with Poly-ond to facilitate release of shavings from the model for removal by sub-atmospheric pressure connected to output 28.

### Warpage Control

Warpage is the single most difficult problem to overcome in producing high accuracy parts. The fundamental properties of the present system would support a severe warpage control problem. The basic material used to produce parts have themselves high shrink rates (18% to 22%) when compared to other materials. When a material has a different specific gravity in one form versus another such as liquid and solid, there will be noticeable shrinkage during phase changes. In our case we must deal with this problem as well as with the physical coefficient of thermal expansion that all solids have. When the parts are formed hot and are used cold there is always a problem with warpage.

To overcome the problems of shrinkage caused warpage, we avail ourselves of the special benefits of our process. The previous described condition describing our materials would apply if one was to cast a part with molten material into a mold. However, we form parts a drop (bead) at a time. In doing so, most of the material shrinkage occurs while the drop is enroute and as soon as the drop hits the building surface. Before the next liquid drop hits the surface and has a chance to completely flow into the previous drop it begins to shrink.

Controlling part geometry, material temperature, bead pitch, flight distance/time, wall pitch and building surface temperature together with layer milling can control the shrinkage to where it has minimum effect on the part to cause warpage. To achieve this, material temperature, flight distance/time, and building surface temperature become standard machine settings, while dot pitch, wall pitch, and layer milling are operational variables. Controlling these variables allows maximum influence on warpage and dimensional control.

Beyond all of these factors is still the problem of individual drop shrinkage and a major objective regardless of the approach is to control drop shrinkage. There must be enough fluidity left in the drop to assure coherence to the previous build but not enough to cause warpage.

### Cross Hatching & Patterns

It is practically impossible to totally eliminate all shrinkage and warpage during building, but it is possible to control it within allowable tolerances. When warpage is still a problem, imaginative fill patterns begin to play an important role. Double crosshatching biaxially reinforces the section of the model to help eliminate anisotropic shrinkage. Uniformity in fill patterns enhances dimensional and shrinkage control. With fill wall pitch it is important to obtain maximum reinforcement with the least amount of material to keep up with the perimeter build. In some cases it may be necessary to alter the perimeter conditions in order to match the fill pattern build rate.

Typically, bead pitch is a settable parameter. In one shrinkage reduction technique, a drop is placed at a specific first bead location. Where the second drop would normally be placed there is a space. A second drop is then placed where the third bead belongs. This pattern is repeated for the complete layer. When the layer is completed with half of the required beads a single drop pitch shift occurs. The layer is then repeated. As a result, the drops of this repeated layer are placed in the spaces between the previous beads. Completing this shifted pattern completes the layer. This may be repeated throughout the part, or perhaps only where warpage or dimensional control is anticipated to be a problem. The advantage is that each drop has the opportunity to fully shrink without the influence of the other drops of that layer. The result is that now the vast majority of the shrinkage has already occurred and the object is effectively being built with pre-shrunk material. Minimized stresses which result have little or no effect on the layers.

### Lattice Support Structures

Important to the successful building of some shell models are internal support patterns or lattices. These patterns allow building models with less then 100% density. Basically they consist of walls of varying thicknesses and pitches and running either unidirectional or bi-directionally. Orientation of the patterns should be carefully considered to ensure minimum warpage.

In some modes, their shape may pose warpage problems when using unidirectional patterns. This additional warpage comes as a result of polarizing stresses in one direction. In these cases, changing the support pattern orientation may decrease the warpage problems by redistributing the stresses. In any case the unidirectional pattern chosen continues throughout the part.

Bi-directional lattices consist of bi-directional walls in the same layer. This is particularly helpful with smaller aspect ratios that require the same reinforcement in all directions. In cases of larger aspect ratios there may be reasons to vary the pattern pitch from one direction to the other to further increase the control of warpage.

Basically the major reasons for lattice patterns are: 1. Density reduction. This has several direct benefits. First there is the obvious benefit of less material and therefore less expense. Second, there is reduced time required to build the model. With 40% less material a comparable solid model will take considerably more time to build. 2. Warpage control. While warpage is a relatively minor problem, the fill pattern options further reduce it to the point where secondary solutions such as annealing and fixturing should account for only single digit percentage of applications. 3. Reduction of strain of a wax pattern on the ceramic cavity during processing in an investment casting operation. 4. Model cooling is quicker.

There are several factors to consider when determining the type of lattice pattern for a model. 1. What is the minimum amount of material required for the model? Sometimes the model may have to be solid. 2. What is the anticipated warpage? 3. What is the desired outside wall finish? This must be considered in those cases where the wall type selections cause accelerated build rates. These cases require matching the build rates of the exterior walls with those of the lattice walls. 4. Is the part going to be closed off? Depending on the height of the part, this will determine the pattern pitch. The shallower the part, the closer the pattern pitch has to be.

Structure lattice reinforcing arrangements such as have been described above are exemplified by Figures 9-13. In Figure 9 a horizontal hollow cross-section of a square tower model is shown with unidirectional interior reinforcing walls 120 interconnecting a pair of opposite outer walls. Figure 10 is a cross-section similar to that of Figure 9 with bidirectional reinforcing walls 121. Figure 11 illustrates a variation of Figure 10 in which the bidirectional reinforcing walls terminate in an inner wall 122 of the model which is formed in each layer after the corresponding outer wall of that layer has been formed. By this arrangement undesirable stresses in the outer wall of the model, surface discontinuity or warpage thereof can be reduced or eliminated. Figure 12 is a horizontal cross-section of a right cylindrical tower model with concentric inner reinforcing walls 123 spaced by ribs 124 to form a unitary structure. Figure 13 illustrates a method of closing the top of a square tower model, such as illustrated in Figures 9 and 10, in which the top 125 of the tower is to be closed. In this arrangement when the model layers approach the closed top, drops are ejected over the entire area of the tower with the result that some of these drops form beads broadening the top of the reinforcing walls and some of the drops fall between the reinforcing walls to form beads at the bottom of the tower as shown as 126. As the layers are formed progressively toward the closed top, the width of the walls increases as additional beads are formed thereon until the space between the reinforcing walls is closed as shown in Figure 13. The solid top can then be completed.

### External Surface Finish Control

The jet head traverses in a computer controlled fashion to create 3 dimensional objects as earlier described by repetitively applying layers of (MC) varying or the same cross-section until the desired shape is obtained. In this manner, walls are constructed a droplet at a time at various spacings or dot pitch.

As the jet dispenses the MC droplets they land on a substrate and form 3 dimensional beads of a thickness slightly less than one half of their diameter after solidification. Depending upon the pitch, these drops can be deposited in an overlapping pattern. When new overlapping droplets hit the solid drops below, their momentum causes them to splatter slightly forward in the direction of printing. The resulting formation is similar to that which would be achieved by laying soft disks in a line with the disks overlapping each other. The degree of overlap can be 75% of more with each disk overlapping the previous one and dropping down to the layer below. After a significant number of layers have been laid down a roping or serpentine pattern can be detected in the wall when viewed from the side. The roping pattern may be undesirable in some applications and can be significantly diminished or totally eliminated by the addition of an immediately adjacent inner wall or walls. The actual number of walls will be determined by other factors (such as vertical build rate) in addition to the required finish. The wall thickness (or wall pitch) can be set to whatever is required.

The roping pattern appears primarily in single pitch walls, meaning a wall consisting of a single drop allowing the fluid droplet to wet the top of an interior wall when it splatters. Thus, the droplet wets inwardly as well as in the direction of building, reducing the volume of MC available for the roping pattern. The net result is a smoother exterior wall.

Interior lattice or fill patterns have a visible influence on exterior wall finish due to the thermal effect their ends have on the thin wall. With multiple thickness exterior walls this mass related phenomenon is reduced. As the exterior wall is made thicker, the ratio of lattice material and wall material is shifted in favor of the wall so that there is less lattice effect in the wall finish.

Wall intersections with lattices are determined by software algorithms so that whenever there is an intersection, the end of the lattice line is pulled back from the centerline of the wall by 50% of the lattice wall thickness Since the lattice walls and exterior single walls are the same construction the result is a 50% merging of material at each intersection. When building with multiple thickness exterior walls of the lattices interest only with the inner most wall. Therefore, latticing will effect the outside finish of a single thickness exterior wall more than a multi-thickness exterior wall which masks the lattice effect on exterior finish.

### Corner Structure

A technique for forming outside and inside corners of the model's perimeter is very similar to the merging of material mentioned earlier when discussing the lattice walls intersecting with exterior walls. When turning corners with the jet, the MC material tends to accumulate at the corner. This accumulation is due in part to the fact that the material flow is being disrupted and the new adjacent wall allows the surface tension of the fluid to pull some of the material flow is being disrupted and the new adjacent wall allows the surface tension of the fluid to pull some of the material of both walls into the corner. Also, when the jet is at the intersection of two walls and MC is being jetted on the centerline of each wall there is some material overlap between the two walls and more material is deposited at the intersection than along the wall. Without correction, this phenomenon would gradually build the corners up vertically at a higher rate than along a straight wall.

This phenomenon can be compensated for by either stopping the end of the first wall a full wall thickness away from the adjacent wall or pulling both walls back 25%. In either case, the MC material flows into the space reducing the amount of material in the corner and diminishing the effect. At the same time, a corner is formed with a radii that is 50% of a single wall thickness.

### Layer Cohesion

As droplets are laid down on top of the previous layer, there is a reflow phenomenon which acts to bond the new layer with the old layer. This reflow extends into the previous layer for only a small percentage of the layer thickness but is sufficient to accomplish several major things.

First, it enhance the bond between the new layer and the previous layer. Inter-layer cohesion assures an integral part when the model is finished.

Second, it relieves some of the stresses in the previous layer caused by shrinkage. The previous layer went through the same building technique as the new one goes through. When a layer solidifies it does so from the bottom up since the previous layer was already relatively cold. Because the top of the layer is not constrained and the bottom is, non-uniform shrinkage occurs, this difference in shrinkage caused stress in the layer. When the new layer is applied the reflow zone tends to relax much of the stress. By giving up the majority of its heat directly into the previous layer a degree of annealing is achieved. This mini-annealing process is repeated layer after layer.

Third, exterior part finish is improved. The minor melting of the cohesion/reflow zone also promotes a blending of layers at their union. This improves finish by virtue of reducing the depth of the junction at the merging of the droplet radii of the previous layer with the current layer in a fillet fashion.

Up to four layers seem, in tests, to be noticeably improved as to surface finish by reflowing of the cohesion zone of previous layers.

### Annealing

If, after all these steps have been carried out, there is still stress and warpage that needs to be removed, one option left is annealing. Generally, annealing is a last resort. Provided the part has remained securely mounted to the mounting plate, annealing is generally not required.

## Claims

1. A 3-D model maker for producing a 3-D model by sequentially forming layer upon layer, by depositing discrete beads of modelling material one layer at a time, to define the walls of a model, comprising:
a) a support means (10) defining a surface for supporting a 3-D model during production;
b) a drop on demand jet means (60) for ejecting discrete bead producing drops of molten modelling material one drop at a time upon demand;
c) mounting means (5,7,12) mounting the jet means for movement along at least two axes of an X,Y,Z axes coordinate system relative to said surface; and
d) control means, (i) for controlling movement of the mounting means (5,7,12) to move the jet means (60) along at least two axes of the X,Y,Z axes coordinate system and, (ii) for controlling timing of the ejection of bead producing drops of molten modelling material by the jet means (60) to overlap previously deposited beads to a desired extent and to meld with previously deposited beads to generate layers of modelling material defined by the beads;
**characterised in that** the mounting means (5,7,12) permits simultaneous movement of the jet means (60) along at least two axes of the X,Y,Z, coordinate system, the control means controlling movement of the jet means (60) along vectors corresponding to the walls of the model.

2. A 3-D model maker according to claim 1 **characterised in that** a model shaving system (24) is movable to shave the model to a desired height along the Z coordinate when desired; and electromagnets (31) being provided for selectively mounting said shaving system (24) to said mounting means (5,7,12) for movement thereby, under control of the control means (11), when shaving is desired and demounting said shaving system (24) from said mounting means (5,7,12) when shaving is not desired.

3. A 3-D model maker according to claim 1 **characterised in that** a responsive means (11) is responsive to vector plotting speed, acceleration and direction for controlling bead drop rate of said jet means (60) to provide a constant bead pitch while said jet means (60) moves along a vector during speed and direction changes of said vector, thereby providing a wall of modelling material having a substantially constant width and having sides with a desired surface quality regardless of speed, acceleration, angle or curvature of said vector, preferably wherein said responsive means provides the control on the basis of vector plotting speed and direction during acceleration of the jet means (60) and on the basis of time when jet means (60) speed is substantially constant.

4. A 3-D model maker according to claim 3 **characterised in that** said vector plotting speed and direction are detected by X and Y coordinate encoders (29,30) and the responsive means (11) receives and responds to outputs of these, the direction of plot being determined continually by calculating one of the arc tangent and the sum of the squares of the instantaneous ratio of encoder outputs.

5. A 3-D model maker according to claim 4 **characterised in that** constant bead pitch is achieved by controlling the responsive means (11) to fire said jet means (60) in response to the X and Y coordinate encoder (29,30) that is closer in angle to said calculated direction, in dependence upon that angle.

6. A method of producing a 3-D model by forming a contiguous plurality of parallel layers of modelling material on a platform comprising the steps of:
a) producing a plurality of bead producing drops of the molten modelling material for deposition from a drop on demand jet at desired locations to solidify into beads to form at least a portion of a layer of said parallel layers;
b) moving the drop on demand jet (60) in the X-Y coordinates relative to a support surface to deposit discrete beads of molten modelling material on the support surface;
c) timing the production of said plurality of discrete beads, at least, when producing said desired outer surface defining wall to overlap previously deposited beads to a desired extent and to meld with previously deposited beads to produce a layer of the model;
d) adjusting the location of the drop on demand jet (60) relative to the support surface in the Z coordinate following formation of said layer in preparation for the formation of a subsequent said layer;
e) repeating steps a), b), c), and d) as required to complete the model; **characterised in that** jet (60) is moved simultaneously in the X and Y coordinates thereby depositing discrete beads along vectors defining the walls of the model.

7. A method of producing a 3-D model according to claim 6
**characterised in that** the step of controlling bead drop rate of said jet means (60), at least when forming exposed walls of the model when finished, is controlled in response to vector plotting speed, acceleration and direction to provide a constant bead pitch while said jet means moves along a vector, regardless of speed, acceleration, angle or curvature of said vector and thereby provide said walls of modelling material having a substantially constant width and having sides with a desired surface quality regardless of speed, acceleration, angle or curvature of said vector.

8. A method of producing a 3-D model according to claim 7
**characterised in that** said bead drop rate is controlled on the basis of vector plotting speed and direction during acceleration of the jet means and on the basis of time when jet means speed is substantially constant.

9. A method of producing a 3-D model according to claim 7
**characterised by** the steps of:
detecting vector plotting speed and direction of the jet means with X and Y coordinate encoders and controlling the bead drop rate in response to output of the encoders; and
continually determining the direction of plot by calculating one of the arc tangent and the sum of the squares of the instantaneous ratio of encoder outputs.

10. A method of producing a 3-D model according to claim 9
**characterised in that** the bead drop is controlled in response to the X and Y coordinate encoder (29,30) that is closer in angle to said calculated direction, in dependence upon that angle, to maintain a constant bead pitch.

11. A method of producing a 3-D model according to claim 6
**characterised by** the step of shaving the model to a desired height along the Z coordinate when desired by:
a) halting ejection of bead producing drops from the jet means (60);
b) moving the mounting means (5,7,12) to a shaving means (24) rest position;
c) coupling the mounting means (5, 7, 12) to a shaving means (21), parked in the rest position, for moving the shaving means (24) with the mounting means (5,7,12) and shaving the model to a desired height along the Z coordinate;
d) moving the mounting means (5,7,12) to the rest position upon completion of shaving and uncoupling the shaving means (24) from the jet means (60), thereby parking the shaving means (24) in the rest position; and
e) resuming ejection of bead producing drops from the jet means (60), with the shaving means (24) parked in the rest position, to produce additional layers if desired.

12. A method of producing a 3-D model according to claim 11
**characterised by** the step of providing electromagnets (31) on at least one of said mounting means (5,7,12) and said shaving means (24), and energizing these electromagnets (31) for the selectively coupling of said shaving system (24) to the mounting mens (5,7,12).

13. A method of producing a 3-D model according to claim 6
**characterised by** the step of ejecting the bead producing drops of material at a temperature high enough to ensure that the beads of modelling material are still at least partially molten when the beads impact previously deposited beads, at least when forming one of an interior and outer wall of a model, to fuse the beads to and blend into the previously deposited beads thereby to enhance the surface finish of the wall.

14. A method of producing a 3-D model according to claim 6
**characterised by** the step of moving the jet means to form a double wall of said overlapping beads, at least when forming exposed walls of the model, thereby to enhance the surface finish of the wall.

## Patentansprüche

1. 3D-Modell-Herstellungsvorrichtung zur Herstellung dreidimensionaler Modelle durch aufeinanderfolgendes Bilden einer Schicht auf einer Schicht, indem diskrete Perlen aus Modelliermaterial in einer Schicht pro Zeit abgelagert werden, um die Wände eines Modells zu bestimmen, mit:
(a) einer Trägervorrichtung (10), die eine Oberfläche zum Tragen eines dreidimensionalen Modells während seiner Herstellung bestimmt;
(b) einer Tropfen-auf-Anfrage-Ausstoßvorrichtung (60), um diskrete Perlen erzeugende Tropfen aus geschmolzenen Modelliermaterial mit einem Tropfen pro Zeit auf Anfrage auszustoßen;
(c) einer Befestigungsvorrichtung (5, 7, 12), die die Ausstoßvorrichtung für eine Bewegung entlang von zumindest zwei Achsen eines XYZ-Achsen-Koordinatensystems relativ zu der Oberfläche befestigt; und
(d) einer Steuervorrichtung (i) zum Steuern der Bewegung der Befestigungsvorrichtung (5, 7, 12), um die Ausstoßvorrichtung (60) entlang von zumindest zwei Achsen des XYZ-Achsen-Koordinatensystems zu bewegen und (ii) zum Steuern der Ausstoßzeit von Perlen erzeugenden Tropfen aus geschmolzenen Modelliermaterial durch die Ausstoßvorrichtung (60), damit sie sich mit zuvor abgelagerten Perlen zu einem gewünschten Ausmaß überlappen und mit zuvor abgelagerten Perlen verschmelzen, um durch die Perlen bestimmte Schichten aus Modelliermaterial zu erzeugen;
**dadurch gekennzeichnet, daß** die Befestigungsvorrichtung (5, 7, 12) die gleichzeitige Bewegung der Ausstoßvorrichtung (60) entlang von zumindest zwei Achsen des XYZ-Achsen-Koordinatensystems zuläßt, wobei die Steuervorrichtung die Bewegung der Ausstoßvörrichtung (60) entlang von Vektoren steuert, die den Wänden des Modelle entsprechen.

2. 3D-Modell-Herstellungsvorrichtung nach Anspruch 1, **dadurch gekennzeichnet, daß** ein Modellabstreifsystem (24) bewegbar ist, um das Modell auf eine gewünschte Höhe entlang der Z-Koordinate abzustreifen, wenn es erwünscht ist; und daß Elektromagnete (31) vorgesehen sind, um das Abstreifsystem (24) an der Befestigungsvorrichtung (5, 7, 12) selektiv zu befestigen, damit es sich mit ihr unter der Kontrolle der Steuervorrichtung (11) bewegt, wenn das Abstreifen erwünscht ist, und um das Abstreifsystem (24) von der Befestigungsvorrichtung (5, 7, 12) zu trennen, wenn das Abstreifen nicht erwünscht ist.

3. 3D-Modell-Herstellungsvorrichtung nach Anspruch 1, **dadurch gekennzeichnet, daß** eine Reagiervorrichtung (11) auf eine Vektorzeichengeschwindigkeit, -beschleunigung und -richtung reagiert, um die Perlentropfrate der Ausstoßvorrichtung (60) zu steuern, damit eine konstante Perlendichte geschaffen wird, während sich die Ausstoßvorrichtung (60) entlang eines Vektors mit Geschwindigkeits- und Richtungsänderungen des Vektors bewegt, wodurch eine Wand aus Modelliermaterial mit einer im wesentlichen konstanten Breite und mit Seiten geschaffen wird, die unabhängig von der Geschwindigkeit, der Beschleunigung, dem Winkel oder der Krümmung des Vektors eine gewünschte Oberflächenqualität aufweist, wobei vorzugsweise die Reagiervorrichtung die Steuerung während der Beschleunigung der Ausstoßvorrichtung (60) auf der Basis der Vektorzeichengeschwindigkeit und -richtung und, wenn die Geschwindigkeit der Ausstoßvorrichtung (60) im wesentlichen konstant ist, auf der Zeitbasis macht.

4. 3D-Modell-Herstellungsvorrichtung nach Anspruch 3, **dadurch gekennzeichnet, daß** die Vektorzeichengeschwindigkeit und -richtung durch X- und Y-Koordinatenumsetzer (29, 30) detektiert werden, und daß die Reagiervorrichtung (11) Ausgänge von diesen empfängt und darauf reagiert, wobei die Zeichenrichtung kontinuierlich durch die Berechnung entweder des Arcustangens oder der Summe der Quadrate des unmittelbaren Verhältnisses der Umsetzerausgänge bestimmt wird.

5. 3D-Modell-Herstellungsvorrichtung nach Anspruch 4, **dadurch gekennzeichnet, .daß** eine konstante Tropfendichte durch Steuern der Reagiervorrichtung (11) erreicht wird, um die Ausstoßvorrichtung (60) als Reaktion auf den X- und Y-Koordinatenumsetzer (29, 30), der im Winkel näher an der berechneten Richtung liegt, in Abhängigkeit von diesem Winkel anzutreiben.

6. Verfahren zur Herstellung eines dreidimensionalen Modells durch Bilden einer aneinanderhängenden Vielzahl paralleler Schichten aus Modelliermaterial auf einer Plattform mit den folgenden Schritten:
(a) Herstellen einer Vielzahl von eine Perle erzeugenden Tropfen aus geschmolzenen Modelliermaterial, die bei aus einem Tropfen-auf-Anfrage-Ausstoßer an erwünschten Stellen abgelagert werden, damit sie sich in Perlen verfestigen, um zumindest einen Teil einer Schicht der parallelen Schichten zu bilden;
(b) Bewegen des Tropfen-auf-Anfrage-Ausstoßers (60) in den X-Y-Koordinaten relativ zu einer Trägeroberfläche, um diskrete Perlen aus geschmolzenen Modelliermaterial auf der Trägeroberfläche abzulagern;
(c) Takten der Herstellung der Vielzahl diskreter Tropfen zumindest während der Herstellung der die gewünschte Außenoberfläche bestimmenden Wand, damit sie mit zuvor abgelagerten Perlen zu einem gewünschten Ausmaß überlappen und mit zuvor abgelagerten Tropfen verschmelzen, um eine Schicht des Modells herzustellen;
(d) Einstellen der Position des Tropfen-auf-Anfrage-Ausstoßers (60) in der Z-Koordinate relativ zu der Trägeroberfläche im Anschluß an die Bildung der Schicht bei der Vorbereitung für die Bildung einer der Schicht nachfolgenden Schicht;
(e) Wiederholen der Schritte (a), (b), (c) und (d), wie es erforderlich ist, um das Modell fertigzustellen; **dadurch gekennzeichnet, daß** der Ausstoßer (60) gleichzeitig in der X- und Y-Koordinate bewegt wird, um dadurch diskrete Perlen entlang von Vektoren abzulagern, die die Wände von dem Modell bestimmen.

7. Verfahren zur Herstellung eines dreidimensionalen Modells nach Anspruch 6, **dadurch gekennzeichnet, daß** der Schritt des Steuerns der Perlentropfrate der Ausstoßvorrichtung (60) zumindest beim Bilden von Wänden des Modells, die freiliegen, wenn es fertiggestellt ist, in Reaktion auf, die Vektorzeichengeschwindigkeit, -beschleunigung und - richtung gesteuert wird, um unabhängig von der Geschwindigkeit, der Beschleunigung, dem Winkel oder der Krümmung des Vektors eine konstante Perlendichte zu schaffen, während sich die Ausstoßvorrichtung entlang eines Vektors bewegt, und um dadurch die Wände aus Modelliermaterial mit einer im wesentlichen konstanten Dicke und mit Seiten zu schaffen, die eine gewünschte oberflächenqualität unabhängig von der Geschwindigkeit, der Beschleunigung, dem Winkel oder der Krümmung des Vektors aufweisen.

8. Verfahren zur Herstellung eines dreidimensionalen Modells nach Anspruch 7, **dadurch gekennzeichnet, daß** die Perlentropfrate auf der Basis der Vektorzeichengeschwindigkeit und -richtung während der Beschleunigung der Ausstoßvorrichtung und, wenn die Ausstoßvorrichtungsgeschwindigkeit im wesentlichen konstant ist, auf der Basis der Zeit gesteuert wird.

9. Verfahren zur Herstellung eines dreidimensionalen Modells nach Anspruch 7, **gekennzeichnet durch** die folgenden Schritte:
Detektieren der Vektorzeichengeschwindigkeit und -richtung der Ausstoßvorrichtung mit X- und Y- Koordinatenumsetzern und Steuern der Perlentropfrate als Reaktion auf den Ausgang der Umsetzer; und
Andauerndes Bestimmen der Zeichenrichtung **durch** Berechnen entweder des Arcustangens oder der Summe der Quadrate des unmittelbaren Verhältnisses der Umsetzerausgänge.

10. Verfahren zur Herstellung eines dreidimensionalen Modells nach Anspruch 9, **dadurch gekennzeichnet, daß** der Perlentropfen als Reaktion auf den X- und Y-Koordinatenumsetzer (29, 30), der im Winkel dichter zu der berechneten Richtung liegt, in Abhängigkeit von diesem Winkel gesteuert wird, um eine konstante Perlendichte aufrechtzuerhalten,

11. Verfahren zur Herstellung eines dreidimensionalen Modells nach Anspruch 6, **gekennzeichnet durch** den Schritt des Abstreifens des Modells auf eine gewünschte Höhe entlang der Z-Koordinate, wenn es erwünscht ist, **durch**:
(a) Anhalten des Ausstoßens der eine Perle erzeugenden Tropfen aus der Ausstoßvorrichtung (60);
(b) Bewegen der Befestigungsvorrichtung (5, 7, 12) in eine Ruhestellung der Abstreifvorrichtung (24);
(c) Ankuppeln der Befestigungsvorrichtung (5, 7, 12) an eine Abstreifvorrichtung (24), die in der Ruhestellung geparkt ist, um die Abstreifvorrichtung (24) mit der Befestigungsvorrichtung (5, 7, 12) zu bewegen und um das Modell auf eine gewünschte Höhe entlang der Z-Koordinate abzustreifen;
(d) Bewegen der Befestigungsvorrichtung (5, 7, 12) in eine Ruhestellung nach Abschluß des Abstreifens und Abkuppeln der Abstreifvorrichtung (24) von der Ausstoßvorrichtung (60), um **dadurch** die Abstreifvorrichtung (24) in der Ruhestellung zu parken; und
(e) Wiederaufnehmen des Ausstoßens der Perlen erzeugenden Tropfen aus der Ausstoßvorrichtung (60), um zusätzliche Schichten zu erzeugen, wenn das erwünscht ist, wobei die Abstreifvorrichtung (24) in der Ruhestellung geparkt ist.

12. verfahren zur Herstellung eines dreidimensionalen Modells nach Anspruch 11, **gekennzeichnet durch** den Schritt des Zur-Verfügung-Stellens von Elektromagneten (31) an zumindest der Befestigungsvorrichtung (5, 7, 12) oder der Abstreifvorrichtung (24) und Anschalten der Elektromagnete (31), um das Abstreifsystem (24) selektiv an die Befestigungsvorrichtung (5, 7, 12) anzukuppeln.

13. Verfahren zur Herstellung eines dreidimensionalen Modells nach Anspruch 6, **gekennzeichnet durch** den Schritt des Ausstoßens der Perlen erzeugenden Tropfen aus Material bei einer Temperatur, die hoch genug ist, um zu gewährleisten, daß die Perlen aus Modelliermaterial noch zumindest teilweise geschmolzen sind, wenn die Perlen auf zuvor abgelagerte Perlen treffen, zumindest wenn eine Innen- oder Außenwand eines Modells gebildet wird, damit die Perlen mit zuvor abgelagerten Perlen verschmelzen und eich damit mischen, um **dadurch** die Oberflächengüte der Wand zu verbessern.

14. Verfahren zur Herstellung eines dreidimensionalen Objekts nach Anspruch 6, **gekennzeichnet durch** den Schritt des Bewegens der Ausstoßvorrichtung, um eine Doppelwand sich überlappender Perlen zu bilden, zumindest wenn freiliegende Wände des Modells gebildet werden, um **dadurch** die Oberflächengüte der Wand zu verbessern.

## Revendications

1. Appareil de réalisation de modèle en trois dimensions destiné à fabriquer un modèle en trois dimensions en formant séquentiellement une couche sur une autre, en déposant des perles discrètes d'un matériau de modelage une couche à la fois, afin de définir les parois d'un modèle comprenant :
a) un moyen de support (10) définissant une surface destiné à supporter un modèle en trois dimensions durant la fabrication,
b) un moyen de busettes à gouttes à la demande (60) destiné à éjecter des gouttes produisant des perles discrètes de matériau de modelage fondu une goutte à la fois à la demande,
c) un moyen de montage (5, 7, 12) montant le moyen de busettes en vue d'un déplacement le long d'au moins deux axes d'un système de coordonnées à axes X, Y, Z par rapport à ladite surface, et
d) un moyen de commande, (i) destiné à commander le déplacement du moyen de montage (5, 7, 12) afin de déplacer le moyen de busettes (60) le long d'au moins deux axes du système de coordonnées à axes X, Y, Z et, (ii) destiné à commander la temporisation de l'éjection de gouttes produisant des perles de matériau de modelage fondu par le moyen de busettes (60) pour qu'elles recouvrent les perles déposées précédemment dans une certaine mesure et qu'elles s'étalent avec les perles déposées précédemment afin de générer des couches de matériau de modelage définies par les perles,
**caractérisé en ce que** le moyen de montage (5, 7, 12) permet un déplacement simultané du moyen de busettes (60) le long d'au moins deux axes du système de coordonnées X, Y, Z, le moyen de commande commandant le déplacement du moyen de busettes (60) le long de vecteurs correspondant aux parois du modèle.

2. Appareil de réalisation de modèle en trois dimensions selon la revendication 1, **caractérisé en ce qu'**un système d'arasement de modèle (24) est mobile afin d'araser le modèle à une hauteur souhaitée le long de la coordonnée Z lorsqu'on le souhaite, et que des électroaimants (31) sont prévus en vue de, sélectivement, monter ledit système d'arasement (24) sur ledit moyen de montage (5, 7, 12) en vue d'un déplacement grâce à celui-ci, sous la commande du moyen de commande (11), lorsqu'un arasement est désiré, et démonter ledit système d'arasement (24) dudit moyen de montage (5, 7, 12) lorsqu'un arasement n'est pas souhaité.

3. Appareil de réalisation de modèle en trois dimensions selon la revendication 1, **caractérisé en ce qu'**un moyen sensible (11) est sensible à une vitesse, une accélération et une direction de tracé de vecteur en vue de commander la vitesse de chute des perles dudit moyen de busettes (60) pour procurer un pas de perle constant tandis que le moyen de busettes (60) se déplace le long d'un vecteur durant des changements de vitesse et de direction dudit vecteur, en réalisant par ce moyen une paroi de matériau de modelage présentant une largeur pratiquement constante et comportant des côtés présentant une qualité de surface souhaitée indépendamment de la vitesse, de l'accélération, de l'angle de courbure dudit vecteur, dans lequel de préférence ledit moyen sensible réalise la commande sur la base de la vitesse et de la direction de tracé de vecteur durant l'accélération du moyen de busettes (60) et sur la base du temps lorsque la vitesse du moyen de busettes (60) est sensiblement constante.

4. Appareil de réalisation de modèle en trois dimensions selon la revendication 3, **caractérisé en ce que** lesdites vitesse et direction de tracé de vecteur sont détectées par des codeurs (29, 30) de coordonnées X et.Y et **en ce que** ledit moyen sensible (11) reçoit des sorties de ceux-ci et répond à celles-ci, la direction du tracé étant déterminée en continu en calculant l'un parmi l'arc tangente et la somme des carrés du rapport instantané des sorties des codeurs.

5. Appareil de réalisation de modèle en trois dimensions selon la revendication 4, **caractérisé en ce qu'**un pas de perle constant est obtenu en commandant le moyen sensible (11) pour déclencher ledit moyen de busettes (60) en réponse au codeur (29, 30) de coordonnées X et Y dont l'angle est le plus proche de ladite direction calculée, en fonction de cet angle.

6. Procédé de fabrication d'un modèle en trois dimensions en formant une pluralité contiguës de couches parallèles de matériau de modelage sur une plate-forme comprenant les étapes consistant à :
a) produire une pluralité de gouttes produisant des perles du matériau de modelage fondu en vue d'un dépôt à partir d'une busette de gouttes à la demande à des emplacements souhaités pour qu'elles se solidifient en perles pour former au moins une partie d'une couche desdites couches parallèles,
b) déplacer la busette de gouttes à la demande (60) suivant les coordonnées X, Y par rapport à une surface de support afin de déposer des perles discrètes de matériau de modelage fondu sur la surface de support,
c) temporiser la production de ladite pluralité de perles discrètes, au moins, lors de la production de ladite paroi définissant une surface extérieure souhaitée pour qu'elles recouvrent les perles déposées précédemment dans une certaine mesure et pour qu'elles s'étalent avec les perles déposées précédemment afin de produire une couche du modèle,
d) ajuster l'emplacement de la busette de gouttes à la demande (60) par rapport à la surface de support suivant la coordonnée Z à la suite de la formation de ladite couche en préparation pour la formation d'une dite couche suivante,
e) répéter les étapes a), b), c), et d) comme nécessaire afin d'achever le modèle, **caractérisé en ce que** la busette (60) est déplacée simultanément suivant les coordonnées X et Y en déposant par ce moyen des perles discrètes le long de vecteurs définissant les parois du modèle.

7. Procédé de fabrication d'un modèle en trois dimensions selon la revendication 6, **caractérisé en ce que** l'étape de commande de la vitesse de chute des perles dudit moyen de busettes (60), au moins lors de la formation de parois exposées du modèle lorsqu'il est terminé, est commandée en réponse à une vitesse, une accélération et une direction de tracé de vecteur en vue de procurer un pas de perle constant tandis que ledit moyen de busettes se déplace le long d'un vecteur, indépendamment de la vitesse, de l'accélération, de l'angle ou de la courbure dudit vecteur et de réaliser par ce moyen lesdites parois de matériau de modelage présentant une largeur pratiquement constante et comportant des côtés présentant une qualité de surface souhaitée indépendamment de la vitesse, de l'accélération, de l'angle ou de la courbure dudit vecteur.

8. Procédé de fabrication d'un modèle en trois dimensions selon la revendication 7, **caractérisé en ce que** ladite vitesse de chute des perles est commandée sur la base de la vitesse et de la direction de tracé de vecteur durant l'accélération du moyen de busettes et sur la base du temps lorsque la vitesse du moyen de busettes est sensiblement constante.

9. Procédé de fabrication d'un modèle en trois dimensions selon la revendication 7, **caractérisé par** étapes consistant à :
détecter la vitesse et la direction de tracé de vecteur du moyen de busettes avec les codeurs de coordonnées X et Y et commander la vitesse de chute des perles en réponse à la sortie des codeurs, et
déterminer en continu la direction du tracé en calculant l'un parmi l'arc tangente et la somme des carrés du rapport instantané des sorties des codeurs.

10. Procédé de fabrication d'un modèle en trois dimensions selon la revendication 9, **caractérisé en ce que** la chute des perles est commandée en réponse au codeur (29, 30) de coordonnées X et Y dont l'angle est le plus proche de ladite direction calculée, en fonction de cet angle, afin de maintenir un pas de perle constant.

11. Procédé de fabrication d'un modèle en trois dimensions selon la revendication 6, **caractérisé par** l'étape consistant à araser le modèle à une hauteur souhaitée le long de la coordonnée Z lorsque cela est souhaité en :
a) arrêtant l'éjection de gouttes produisant des perles depuis le moyen de busettes (60),
b) déplaçant le moyen de montage (5, 7, 12) vers une position de repos du moyen d'arasement (24),
c) accouplant le moyen de montage (5, 7, 12) à un moyen d'arasement (24), parqué à la position de repos, en vue de déplacer le moyen d'arasement (24) avec le moyen de montage (5, 7, 12) et d'araser le modèle à une hauteur souhaitée le long de la coordonnée Z,
d) déplaçant le moyen de montage (5, 7, 12) vers la position de repos lors de l'achèvement de l'arasement et désaccouplant le moyen d'arasement (24) du moyen de busettes (60), en parquant ainsi le moyen d'arasement (24) à la position de repos, et
e) reprenant l'éjection de gouttes produisant des perles depuis le moyen de busettes (60), le moyen d'arasement (24) étant parqué à la position de repos, afin de produire des couches supplémentaires si on le souhaite.

12. Procédé de fabrication d'un modèle en trois dimensions selon la revendication 11, **caractérisé par** l'étape consistant à prévoir des électroaimants (31) sur au moins l'un dudit moyen de montage (5, 7, 12) et dudit moyen d'arasement (24), et à exciter ces électroaimants (31) en vue de l'accouplement de façon sélective dudit système d'arasement (24) sur ledit moyen de montage (5, 7, 12).

13. Procédé de fabrication d'un modèle en trois dimensions selon la revendication 6, **caractérisé par** l'étape consistant à éjecter les gouttes produisant des perles de matériau à une température suffisamment élevée pour assurer que les perles de matériau de modelage sont encore au moins en partie fondues lorsque les perles viennent frapper les perles déposées précédemment, au moins lors de la formation de l'une d'une paroi intérieure et d'une paroi extérieure d'un modèle, afin de fusionner les perles dans les perles déposées précédemment et de les mélanger dans celles-ci pour améliorer par ce moyen le fini de surface de la paroi.

14. Procédé de fabrication d'un modèle en trois dimensions selon la revendication 6, **caractérisé par** l'étape consistant à déplacer le moyen de busettes afin de former une double paroi desdites perles en recouvrement, au moins lors de la formation des parois exposées du modèle, afin d'améliorer ainsi le fini de surface de la paroi.
